Europäisches Patentamt

European Patent Office

Office européen des brevets

(19)

(11) Veröffentlichungsnummer: **0 085 365**
B1

# EUROPÄISCHE PATENTSCHRIFT

(12)

(45) Veröffentlichungstag der Patentschrift:
21.05.86

(21) Anmeldenummer: 83100511.1

(22) Anmeldetag: 21.01.83

(51) Int. Cl.⁴: **B 05 D 7/00,** C 09 D 3/72,
C 08 L 75/08, C 04 B 41/48

(54) Verfahren zur Herstellung von Überzügen.

(30) Priorität: 03.02.82 DE 3203490

(43) Veröffentlichungstag der Anmeldung:
10.08.83 Patentblatt 83/32

(45) Bekanntmachung des Hinweises auf die Patenterteilung:
21.05.86 Patentblatt 86/21

(84) Benannte Vertragsstaaten:
AT BE CH DE FR GB IT LI NL

(56) Entgegenhaltungen:
DE - A - 2 622 951

(73) Patentinhaber: BAYER AG, Konzernverwaltung RP
Patentabteilung, D-5090 Leverkusen 1 Bayerwerk (DE)

(72) Erfinder: Gruber, Hermann, Dr., Paul-Klee-Strasse 87,
D-5090 Leverkusen (DE)
Erfinder: Wellner, Wolfgang, Dr., Hahnenweg 8,
D-5000 Köln 80 (DE)

## Beschreibung

Die vorliegende Erfindung betrifft ein neues Verfahren zur Herstellung von Überzügen durch Beschichten beliebiger Substrate mit einem neuartigen Beschichtungsmittel, dessen Bindemittel im wesentlichen aus einer Kombination von NCO-Prepolymeren auf Basis von 1-Isocyanato-3,3,5-trimethyl-5-isocyanatomethyl-cyclohexan (Isophorondiisocyanat, abgekürzt: IPDI) und bestimmten Polyetherpolyolen mit bestimmten, sterisch gehinderten aromatischen Diaminen als Härterkomponente besteht.

Sowohl verputzte als auch unverputzte Baukonstruktionen aus mineralischen Baustoffen wie z.B. solchen auf Basis von Beton oder Ziegeln müssen in zahlreichen Fällen mit einem dichten, gut haftenden Überzug versehen werden, um die Korrosion der Baustoffe selbst bzw. der Bewehrungsstähle zu verhüten. Weiterhin sind Überzüge dann erforderlich, wenn chemische Angriffe auf den Baustoff zu erwarten sin oder wenn Bauteile wie z.B. Fußböden, Auffangwannen und Betonbehälter, eine zuverlässige Abdichtung erfordern.

Der Überzugsfilm muß eine ausreichende Elastizität besitzen, um im Falle einer Rißbildung die Dichtigkeit aufrecht zu erhalten, d.h. der Überzug soll rißüberbrückende Eigenschaften haben. Die schützende Wirkung der Überzüge ist nur dann gewährleistet, wenn die Überzugsfilme eine ausreichende Elastizität und eine ausreichende Schichtdicke besitzen. In der Literatur ist auf diese Zusammenhänge hingewiesen worden (s. z.B. ""Rißüberbrückende Kunststoffbeschichtungen für mineralische Baustoffe" von Günter Rieche, Otto-Graf-Institut Stuttgart, Farbe und Lack, Kurt Vinzenz Verlag, Hannover, 85. Jahrgang, Seiten 824 bis 831, 1979).

Allgemein wird gefordert, daß eine Mindestschichtdicke von 0,1 mm erreicht werden muß. Die Dehnungsfähigkeit der Beschichtungsstoffe sollte im Minimum 100 % betragen.

Bei der Auswahl der Überzugsmaterialien ist zu beachten, daß die zu beschichtenden Oberflächen im allgemeinen porös sind und oft eine gewisse Menge an Wasser enthalten, wobei man die sogenannte Haushaltsfeuchte mit ca. 3,5 % Wasser annimmt. In vielen Fällen, besonders bei Beschichtungsarbeiten im Freien, findet man Wassergehalte, die erheblich höher sind, was zu Wechselwirkungen mit dem Beschichtungsstoff führen muß.

Für die angestrebten dickschichtigen elastischen Überzüge sind lösungsmittelfreie Polyurethan-Systeme predestiniert, weil die Grundstoffe für Polyurethanbeschichtungen Polyisocyanate und Polyalkohole so gewählt werden können, daß elastische Beschichtungsfilme in beliebigen Schichtdicken entstehen. Schwierigkeiten entstehen insofern, als die Isocyanatgruppen neben der Reaktion mit Polyalkoholen ebenfalls in Konkurrenzreaktion mit der Feuchtigkeit des Untergrundes treten. Dies führt zu einer unerwünschten Kohlendioxidabspaltung, die zu einem blasigen Aufschäumen des Beschichtungsstoffes führt. Zur Unterdrückung dieser störenden Nebenreaktion sind zahlreiche Vorschläge gemacht worden. Insbesondere die Mitverwendung von Molekularsiebzeolithen erwies sich als wirksam zur Entfernung von störenden Wassergehalten in den Füllstoffen, Pigmenten oder anderen Bestandteilen der Beschichtungsmaterialien, so daß diese Wassergehalte nicht mehr zu einer unerwünschten Blasenbildung führten (siehe z.B. "Polyurethane für Beschichtungen und Abdichtungen im Bauwesen" Hermann Gruber, Farbe und Lack, Verlag Vinzentz, Hannover, Jahrgang 80, Seiten 831 bis 837, 1974).

Diese "Molekularsiebzeolith-Methode" ist im Falle zu hoher Untergrundfeuchte überfordert, so daß die Blasenbildung durch unerwünschte Kohlendioxidabspaltung bei der Beschichtung von feuchten Substraten nicht mit Sicherheit verhindert werden kann.

Es war daher die der vorliegenden Erfindung zugrundeliegende Aufgabe, ein neues Verfahren zur Herstellung von Überzügen zur Verfügung zu stellen, welches die Herstellung von dickschichtigen, elastischen Überzügen, insbesondere auf wasserenthaltenden mineralischen Baumaterialien gestattet, das mit Sicherheit die unerwünschte Blasenbildung auch bei hoher Untergrundfeuchte vermeidet, und bei welchem lösungsmittelfreie bzw. -arme Beschichtungsmittel niedriger Viskosität und ausreichend langer Topfzeit Verwendung finden.

Diese Aufgabe konnte durch das nachstehend näher beschriebene erfindungsgemäße Verfahren gelöst werden.

Gegenstand der Erfindung ist ein Verfahren zur Herstellung von elastischen Überzügen durch Beschichtung beliebiger Substrate mit einem lösungsmittelfreien bzw. -armen Beschichtungsmittel, welches als Bindemittel ein Zweikomponenten-System aus (i) einer Polyisocyanatkomponente und (ii) einer Härterkomponente enthält, dadurch gekennzeichnet, daß man solche Beschichtungsmittel verwendet, deren Bindemittelkomponente (i) einen NCO-Gehalt von 1 bis 20 Gew.-% aufweist und mindestens ein, freie Isocyanatgruppen aufweisendes, Prepolymer auf Basis von 1-Isocyanato-3,3,5-trimethyl-5-isocyanato-methylcyclohexan und einem oder mehreren Polyalkylenether-Polyolen einer (mittleren) Hydroxylfunktionalität von 2 bis 3 oder ein Gemisch mindestens eines derartigen NCO-Prepolymeren mit bis zu 500 NCO-Äquivalentprozent, bezogen auf die Isocyanatgruppen des Prepolymeren, mindestens eines weiteren Di- oder Triisocyanat mit aliphatisch oder cycloaliphatisch gebundenden Isocyanatgruppen darstellt, und deren Bindemittelkomponente (ii) gegebenenfalls bis zu 50 Äquivalentprozent, bezogen auf alle in den Gemischen vorliegenden, gegenüber Isocyanatgruppen reaktionsfähigen Gruppen, an 2- oder 3-wertigen Alkoholen mit primären Hydroxylgruppen enthält, jedoch zu mindestens 50 Äquivalentprozent aus einem Aminhärter besteht, der ausgewählt ist aus der Gruppe bestehend aus a) mindestens einem diprimären aromatischen Diamin, welches in ortho-Stellung zu jeder Aminogruppe mindestens einen Alkylsubstituenten mit 2 - 3 Kohlenstoffatomen und gegebenenfalls außerdem in weiteren ortho-Stellungen zu den Aminogruppen Methylsubstituenten aufweist, b) freie Aminogruppen aufweisenden Umsetzungsprodukten derartiger Diamine mit unterschüssigen Mengen an NCO-Prepolymeren auf Basis von organischen Diisocyanaten des Molekulargewichtsbereichs 168 bis 300 und Polyalkylenäther-Polyolen einer(mittleren) Hydroxylfunktionslität von 2 bis 3 und c) Gemischen aus a) und b), wobei die Mengenverhältnisse der Reaktionspartner (i) und (ii) in, einem NCO/NH$_2$ -Äquivalentverhältnis von 0,5:1 bis 1,5:1 entsprechenden, Mengen eingesetzt werden.

Erfindungswesentlich für das erfindungsgemäße Verfahren ist die Verwendung von neuen Zweikomponenten-Bindemitteln, die aus einer Isocyanatkomponente (i) und einer Härterkomponente (ii) bestehen.

Die Isocyanatkomponente (i) weist einen NCO-Gehalt von 1 bis 20, vorzugsweise 2 bis 10 Gew.-% auf. Die Isocyanatkomponente (i) besteht aus einem Prepolymer auf Basis von 1-Isocyanato-3,3,5-trimethyl-5-isocyanatomethyl-cyclohexan und Polyetherpolyolen oder Polyetherpolyol-Gemischen einer (mittleren) OH-Funktionalität von 2 bis 3 und eines (mittleren), aus der Funktionalität und dem Hydroxylgehalt errechenbaren Molekulargewicht von 500 bis 4000, vorzugsweise 1000 bis 3000, bzw. aus Gemischen derartiger Prepolymerer mit bis zu 500, vorzugsweise bis zu 300 NCO-Äquivalentprozent, bezogen auf die Isocyanatgruppen des Prepolymeren, an weiteren organischen Polyisocyanaten mit aliphatisch und/oder cycloaliphatisch gebundenen Isocyanatgruppen. Die Herstellung der NCO-Prepolymeren erfolgt in an sich bekannter Weise durch Umsetzung von IPDI mit unterschüssigen Mengen an Polyetherpolyolen bzw. an Polyetherpolyol-Gemischen einer (mittleren) Hydroxylfunktionalität von 2 bis 3 und eines (mittleren), aus der Hydroxylfunktionalität und dem Hydroxylgehalt berechenbaren Molekulargewicht von 500 bis 4000, vorzugsweise 1000 bis 3000, unter Einhaltung eines NCO/OH-Äquivalentverhältnisses von 1,5:1 bis 7:1, vorzugsweise 2:1 bis 4:1. Bei Verwendung eines über 2:1 liegenden Überschusses an IPDI entstehen bei dieser Umsetzung, beim erfindungsgemäßen Verfahren ebenfalls als Isocyanatkomponente geeignete, Gemische von Prepolymeren mit freiem IPDI. Es ist auch möglich, beim erfindungsgemäßen Verfahren als Isocyanatkomponente (i) Gemische von Prepolymeren der genannten Art mit bis zu 500, vorzugsweise bis zu 300 NCO-Äquivalentprozent, bezogen auf die Isocyanatgruppen des Prepolymeren, an anderen organischen Polyisocyanaten mit aliphatisch und/ oder cycloaliphatisch gebundenen Isocyanatgruppen, wie z.B. 4,4'-Diisocyanato-dicyclohexylmethan, Hexamethylendiisocyanat, Tris-(isocyanatohexyl)-biuret und/oder Tris-(isocyanatohexyl)-isocyanurat einzusetzen. Dies ist jedoch weniger bevorzugt als die Verwendung der reinen Prepolymeren bzw. ihrer. Gemische mit überschüssigem IPDI.

Für die Herstellung der Prepolymeren geeignete Polyalkylenetherpolyole sind die in der Polyurethanchemie an sich bekannten Alkoxylierungs- insbesondere Ethoxylierungs- und/oder Propoxylierungsprodukte di- und/oder trifunktioneller Startermoleküle wie z.B. Wasser, Ethylenglykol, 1,2-Dihydroxypropan, Trimethylolpropan oder Glycerin. Es ist auch möglich, solche Polyetherpolyol-Gemische einzusetzen, die durch Alkoxylierung von Startergemischen erhalten werden, welche bei einer mittleren Hydroxylfunktionalität von 2 bis 3 als Einzelkomponente Verbindungen mit mehr als 3 Hydroxylgruppen wie z.B. Pentaerythrit enthalten. Bevorzugte Polyetherpolyole sind Polypropylenglykol und/oder propoxyliertes Trimethylolpropan des genannten (mittleren) Molekulargewichtsbereichs.

Bei der erfindungswesentlichen Härterkomponente (ii) handelt es sich um a) diprimäre aromatische Diamine, b) Umsetzungsprodukte derartiger Diamine mit unterschüssigen Mengen an NCO-Prepolymeren oder um c) Gemische aus a) und b). Geeignete diprimäre aromatische Diamine a) sind solche, die in ortho-Stellung zu jeder Aminogruppe mindestens einen Alkylsubstituenten mit 2 bis 3 Kohlenstoffatomen und gegebenenfalls außerdem in weiteren ortho-Stellungen zu den Aminogruppen Methyl-Substituenten aufweisen. Diese Verbindungen weisen ein Molekulargewicht von 178 bis 346 auf. Typische Beispiele derartiger aromatische Diamine sind 1-Methyl-3,5-diethyl-2,4-diaminobenzol, 1-Methyl-3,5-diethyl-2,6-diaminobenzol, 1,3,5-Triethyl-2,6-di-aminobenzol, 3,5,3',5'-Tetraethyl-4,4'-diamino-diphenyl-methan, 3,5,3',5'-Tetraisopropyl-4,4'-diaminodiphenylmethan, 3,5-Diethyl-3',5'-diisopropyl-4,4'-diaminodiphenylmethan oder beliebige Gemische derartiger Diamine. Es ist auch möglich, als Härterkomponente (ii) freie Aminogruppen aufweisende Umsetzungsprodukte b) derartiger Diamine mit unterschüssigen Mengen an NCO-Prepolymeren einzusetzen. Bei diesen NCO-Prepolymeren handelt es sich um Umsetzungsprodukte von beliebigen organischen Diisocyanaten des Molekulargewichtsbereichs 168 bis 300 wie z.B. Hexamethylendiisocyanat, 2,4- und/oder 2,6-Diisocyanatotoluol, 2,4'- und/ oder 4,4'-Diisocyanatodiphenylmethan, 4,4'-Diisocyanate dicyclohexylmethan oder IPDI mit Polyetherpolyolen oder Polyetherpolyolgemischen einer (mittleren) OH-Funktionalität von 2 bis 3 der bereits oben beispielhaft genannten Art in einem NCO/O- Äquivalentverhältnis von 1,5:1 bis 7:1, vorzugsweise 2:1 bis 4:1. Die Umsetzungsprodukte der aromatischen Diamine mit diesen NCO-Prepolymeren können beispielsweise durch einfaches Zusammengeben der Ausgangskomponenten bei Raumtemperatur unter Einhaltung eines NH$_2$/NCO-Äquivalentverhältnisses von 1,5:1 bis 20:1, vorzugsweise 3:1 bis 8:1 und Ausreagierenlassen der so hergestellten Reaktionsgemische, beispielsweise durch 10- bis 30- minütiges Lagern bei Raumtemperatur erhalten werden. Bei dieser Herstellung der freie Aminogruppen aufweisenden Umsetzungsprodukte können gegebenenfalls mitzuverwendende, gegenüber Amino- und Isocyanatgruppen inerte Hilfsmittel bereits anwesend sein. Bei der Verwendung des Diamins in einem über einem Aquivalentverhältnis von 2:1 liegenden Überschuß entstehen hierbei als Härterkomponente (ii) geeignete Gemische c) aus überschüssigem aromatischen Diamin und dem Umsetzungsprodukt.

Es ist prinzipiell auch möglich, beim erfindungsgemäßen Verfahren als Härterkomponente (ii) Gemische einzusetzen, die neben dem Aminhärter der genannten Art bis zu 50 Äquivalentprozent, bezogen auf alle in den Gemischen vorliegenden, gegenüber Isocyanatgruppen reaktionsfähigen Gruppen, an 2- oder 3-wertige, vorzugsweise 2-wertigen Alkoholen mit primären Hydroxylgruppen wie z.B. Ethylenglykol, Diethylglykol, Triethylenglykol oder anderen Polyetherpolyolen der genannten Funktionalität mit endständigen (primären) Hydroxyethylgruppen eines is zu 6000 liegenden (mittleren) Molekulargewichts einzusetzen. Die Verwendung derartiger Härtergemische ist gegenüber der Verwendung der reinen aromaischen Diamine bzw. Diamingemische allerdings weniger bevorzugt.

Die erfindungswesentlichen Komponenten (i) und (ii) werden bei der Durchführung des erfindungsgemäßen Verfahrens in solchen Mengen eingesetzt, daß das Äquivalentverhältnis zwischen Isocyanatgruppen der Komponente (i) und Aminogruppen der Komponente (ii) zwischen 0,5:1 und 1,5:1, vorzugsweise zwischen 0,9:1 und 1,1:1 liegt. Im Falle der weniger bevorzugten Verwendung der genannten Gemische als Härterkomponente (ii) wird, dem Anteil der Polyolkomponente im Härtergemisch entsprechend, vorzugsweise unter Einhaltung eines NCO/NH$_2$-Äquivalentverhält-nisses von unter 1:1 gearbeitet, so daß das Gesamtverhältnis zwishen Isocyanatgruppen und allen gegenüber Icsocyanatruppen reaktionsfähigen Gruppen bei ca. 0,9:1 bis 1,1:1 liegt.

Es ist oft zweckmäßig, den erfindungsgemäß zu verwendenden Beschichtungsmitteln außer den Bindemittelkomponenten (i) und (ii) 0,1 bis 5 Gew.-%, vorzugsweise 0,5 bis 2 Gew.-%, an organischen, vorzugsweise cycloaliphatischen Carbonsäureanhydriden, insbesondere Dicarbonsäureanhydriden wie z.B. Hexahydrophtalsäureanhydrid oder Methylhexahydrophthalsäureanhydrid einzuverleiben, was zu einer deutlichen Verbesserung der Durchhärtungsgeschwindigkeit führt, ohne die Topfzeit der Beschichtungsmittel nachteilhaft zu beeinflussen.

Die erfindungsgemäß einzusetzenden Beschichtungsmittel können außerdem die in der Beschichtungstechnologie üblichen Hilfs- und Zusatzmittel enthalten.

So können die Beschichtungsmittel beispielsweise bis zu 15 Gew.-%, bezogen auf das Gesamtgewicht der Beschichtungsmittel, an üblichen Lacklösungsmitteln wie z.B. Toluol, Xylol, Essigsäurebutylester und/oder Ethylenglykol-monoethylether-acetat enthalten, obwohl der Einsatz lösungsmittelfreier Beschichtungsmittel erfindungsgemäß bevorzugt ist.

Weitere gegebenenfalls mitzuverwendende Hilfs- und Zusatzmittel sind z.B. Pigmente, Füllstoffe, Weichmacher wie z.B. Steinkohlenteer oder Verlaufshilfsmittel. Die Mitverwendung der üblichen, die Isocyanataadditionsreaktion beschleunigenden Katalysatoren ist im allgemeinen nicht erforderlich, da die erfindungsgemäß zu verwendenden Beschichtungsmittel auch in Abwesenheit derartiger Katalysatoren eine ausreichend hohe Reaktivität aufweisen.

Die wie beschrieben zusammengesetzten, erfindungsgemäß zu verwendenden Beschichtungsmittel weisen bei 23°C im allgemeinen eine zwischen 1000 und 20 000 mPa.s liegende Viskosität und eine Topfzeit von ca. 5 bis 60 Minuten auf.

Sie können nach den üblichen Methoden der Beschichtungstechnologie zur Beschichtung beliebiger Substrate eingesetzt werden. Das bevorzugte Einsatzgebiet für die erfindungsgemäß zu verwendenden Beschichtungsmittel ist die Beschichtung von oftmals feuchten, mineralischen Baumaterialien wie z.B. die Beschichtung von Betonkonstruktionen oder von Mauerwerk. Der besondere Vorteil des erfindungsgemäßen Verfahrens ist darin zu sehen, daß bei der Beschichtung derartiger, feuchter mineralischer Substrate hochelastische, homogene, d.h. blasenfreie Überzüge entstehen. Das erfindungsgemäße Verfahren eignet sich insbesondere zur Herstellung von dickschichtigen, d.h. eine Trockenfilmstärke von 0,2 bis 5 mm aufweisenden Überzügen auf derartigen Substraten.

Mit den nachfolgenden Beispielen soll das erfindungsgemäße Verfahren weiter erläutert werden.

**Beispiele**

In den nachfolgenden Beispielen werden folgende Isocyanatkomponenten eingesetzt:

**Isocyanatkomponente A:**

4000 g eines Polypropylenglykolethers mit dem mittleren Molekulargewicht von 2000, der durch Propoxylierung von 1,2-Dihydroxypropan erhalten wurde, werden mit 1000 g Isophorondiisocyanat versetzt und bei 100°C zu einem NCO-Gruppen aufweisenden Gemisch mit einem NCO-Gehalt von 4 Gew.-% aus dem, den genannten Ausgangsmaterialien entsprechenden, Prepolymeren und freiem IPDI umgesetzt. Das Gemisch stellt eine klare Flüssigkeit der Viskosität 5 Pas/23°C dar. Das Gemisch enthält keine Gelteilchen und ist als Isocyanatkomponente für eine lösungsmittelfreie Beschichtungsmasse gut verwendbar.

**Isocyanatkomponente B:** (Vergleich)

4000 g eines Polypropylenglykolethers mit einem mittleren Mol.-Gewicht von 3000, der durch Propoxylierung von Trimethylolpropan erhalten wurde, werden mit 750 g 2,4-Di-isocyanato-toluol versetzt und bei 100°C zu einem NCO-Prepolymeren mit einem NCO-Gehalt von 3,5 % umgesetzt. Man erhält eine klare Flüssigkeit mit einer Viskosität von 8 Pa x s bei 23°C.

**Beispiel 1**

Eine Betonplatte der Abmesseung 50x20x1,5 cm wird in Wasser eingetaucht und anschließend nach dem Abtropfen mit einer Mischung aus 200 g der Isocyanatkomponente A) und 13,5 g 1-Methyl-3,5-diethyl-2,4-diaminobenzol übergossen. Die Mischung weist eine für die Praxis ausreichende Verarbeitungszeit von ca. 30 Minuten auf und erhärtet auf dem feuchten Untergrund ohne Bildung von Blasen bzw. Formstrukturen zu einem rißüberbrückenden Überzug aus. Folgende mechanische Daten wurden ermittelt:

| | | |
|---|---|---|
| Bruchdehnung | nach DIN 53 455 | 800 % |
| Zugfestigkeit | nach DIN 53 455 | 24 N/mm² |
| Weiterreißwiderstand | nach DIN 53 515 | 30 N/mm² |

**Beispiel 2**

Dieses Beispiel beschreibt den beschleunigenden Einfluß von Carbonsäureanhydrid auf die Durchhärtung der Beschichtung entsprechend Beispiel 1. Die Zusätze an Säureanhydrid betragen zwischen 0,2 und 1,0 bezogen auf den gesamten Ansatz. Als Maß für die Härtungsgeschwindigkeit wird 5 Stunden nach Aufbringen der Beschichtungsmasse die Shore-Härte bestimmt. Aus der folgenden Tabelle sind die Ergebnisse zu entnehmen.

Verarbeitungszeit und Shore-Härte A gemessen bei verschiedenen Zusätzen an Methylhexahydrophthalsäureanhydrid

| % — Zusatz | Minuten | Shore-A nach 5 Stunden |
|---|---|---|
| 0,0 | 30 | 15 |
| 0,2 | 27 | 36 |
| 0,4 | 25 | 50 |
| 0,6 | 23 | 54 |
| 0,8 | 22 | 60 |
| 1,0 | 20 | 62 |

Wie ersichtlich, erhält man bei Zusatz von 0,2 % eine Verdoppelung der Härtungsgeschwindigkeit und eine nur unwesentliche Verkürzung der Topfzeit.

**Beispiel 3** (Vergleich)

Eine Betonplatte der Abmessung 50 x 20 x 1,5 cm wird in Wasser eingetaucht und nach dem Abtropfen mit einer Mischung aus 200 g der Isocyanatkomponente B, 11,5 g Triethylenglykol, 5 g Zeolith-Pulver als Trockenmittel und 0,05 g Dibutylzinndilaurat übergossen. Die Mischung ist ca. 60 Minuten verarbeitbar, härtet jedoch im Vergleich zu Beispiel 1 mit einer Vielzahl von Blasen aus und ist als rißüberbrückende Beschichtung ungeeignet.

**Beispiel 4**

Es wird eine Mischung hergestellt aus 100 g der Isocyanatkomponente nente A und einer separat hergestellten Mischung aus 100 g Steinkohlenteer, 50 g Aluminiumsilikat, 10 g 1-Methyl-3,5-diethyl-2,4-diaminobezol und 25 g der Isocyanatkomponente B, die zwecks Beendigung der Umsetzung zwischen Amino- und Isocyanatgruppen während 30 Minuten bei Raumtemperatur gelagert wurde.

Eine Betonplette der Abmessung 50 x 20 x 1,5 cm wird in Wasser eingetaucht und anschließend nach dem Abtropfen mit der genannten Mischung übergossen. Die Mischung weist eine Verarbeitungszeit von 90 Minuten auf und erhärtet auf dem feuchten Untergrund ohne Bildung von Blasen aus. Folgende mechanische Daten wurden ermittelt:

| | | |
|---|---|---|
| Bruchdehnung | DIN 53 455 | 700 % |
| Zugfestigkeit | DIN 53 455 | 5 N/mm² |
| Weiterreißwiderstand | DIN 53 515 | 15 N/mm² |

**Patentansprüche**

1. Verfahren zur Herstellung von elastischen Überzügen durch Beschichtung beliebiger Substrate mit einem lösungsmittelfreien bzw. -armen Beschichtungsmittel, welches als Bindemittel ein Zweikomponenten-System aus (i) einer Polyisocyanatkomponente und (ii) einer Härterkomponente enthält, dadurch gekennzeichnet, daß man solche Beschichtungsmittel verwendet, deren Bindemittelkomponente (i) einen NCO-Gehalt von 1 bis 20 Gew.-% aufweist und mindestens ein, freie Isocyanatgruppen aufweisendes, Prepolymer auf Basis von 1-Isocyanato-3,3,5-trimethyl-5-isocyanatomethylcyclohexan und einem oder mehreren Polyalkylenether-Polyolen einer (mittleren) Hydroxylfunktionalität von 2 bis 3 oder ein Gemisch mindestens eines derartigen NCO-Prepolymeren mit bis zu 500 NCO-Äquivalentprozent, bezogen auf die Isocyanatgruppen des Prepolymeren, mindestens eines weiteren Di- oder Triisocyanat mit aliphatisch oder cycloaliphatisch gebundenden Isocyanatgruppen darstellt, und deren Bindemittelkomponente (ii) gegebenenfalls bis zu 50 Äquivalentprozent, bezogen auf alle in den Gemischen vorliegenden, gegenüber Isocyanatgruppen reaktionsfähigen Gruppen, an 2- oder 3-wertigen Alkholen mit primären Hydroxylgruppen enthält, jedoch zu mindestens 50 Äquivalentprozent aus einem Aminhärter besteht, der ausgewählt ist aus der Gruppe bestehend aus a) mindestens einem diprimären aromstischen Diamin, welches in otho-Stellung zu jeder Aminogruppe mindestens einen Alkylsubstituenten mit 2 - 3 Kohlenstoffatomen und gegebenenfalls außerdem in weiteren ortho-Stellungen zu den Aminogruppen Methylsubstituenten aufweist, b) freie Aminogruppen aufweisenden Umsetzungsprodukten derartiger Diamine mit unterschüssigen Mengen an NCO-Prepolymeren auf Basis von organischen Diisocyanaten des Molekulargewichtsbereichs 168 bis 300 und Polyalkylenäther-Polyolen einer (mittleren) Hydroxylfunktionalität von 2 - 3 und c) Gemischen aus a) und b), wobei die Mengenverhältnisse der Reaktionspartner (i) und (ii) in, einem NCO/NH$_2$-Äquivalentverhältnis von 0,5:1 bis 1,5:1 entsprechenden Mengen eingesetzt werden.

2. Verfahren gemäß Anspruch 1, dadurch gekennzeichnet, daß man solche Beschichtungsmittel verwendet, deren Bindemittelkomponente (ii) ausschließlich aus den in Anspruch 1 genannten Diaminen a) besteht.

3. Verfahren gemäß Anspruch 1 und 2, dadurch gekennzeichnet, daß man die Beschichtungsmittel auf, gegebenenfalls wasserhaltige, mineralische Substrate aufträgt.

4. Verfahren gemäß Anspruch 1 bis 3, dadurch gekennzeichnet, daß man den Beschichtungsmitteln, bezogen auf die Summe (i) + (ii), 0,1 bis 5 Gew.-% eines Carbonsäureanhydrids einverleibt.

5. Verfahren gemäß Anspruch 1 bis 4, dadurch gekennzeichnet, daß man den Beschichtungsmitteln in der Beschichtungstechnologie übliche Hilfs- und Zusatzmittel einverleibt.

**Claims**

1. Process for the production of elastic coatings by coating any desired substrates with a solvent-free or low solvent coating composition which contains, as binder, a two-component system of (i) a polyisocyanate component and (ii) a hardener component, characterised in that coating compositions are used whose binder component (i) has an NCO content of 1 to 20% by weight and comprises at least one prepolymer, which contains free isocyanate groups and is based on 1-isocyanato-3,3,5-isocyanatomethylcyclohexane and one or more polyalkylene ether polyols of an (average) hydroxyl functionality of 2 to 3, or a mixture of at least one such NCO prepolymer with up to 500 NC0 equivalent percent, based on the isocyanate groups of the prepolymer, of at least one other di- or triisocyanate containing aliphatically or cycloaliphatically bound isocyanate groups, and whose binder component (ii) optionally contains up to 50 equivalent percent, based on all of those groups present in the mixtures which are reactive towards isocyanate groups, of 2- or 3-hydric alcohols containing primary hydroxyl groups but consists to an extent of at least 50 equivalent percent of an amine hardener which is selected from the group consisting of a) at least one diprimary aromatic diamine, which contains, in an ortho position to each amino group, at least one alkyl substituent with 2 - 3 carbon atoms and optionally, in addition, methyl substituents in further ortho positions to the amino groups, b) reaction products, containing free amino groups, of such diamines with subequivalent quantities of NCO prepolymers based on organic diisocyanates of a molecular weight range of 168 to 300 and polyalkylene ether polyols of an (average) hydroxyl functionality of 2 - 3 and c) mixtures of a) and b), the quantitative ratios of reactants (i) and (ii) being used in quantities corresponding to an NCO/NH$_2$ equivalent ratio of 0.5:1 to 1.5:1.

2. Process according to Claim 1, characterised in that coating compositions are used whose binder component (ii) consists exclusively of the diamines a) mentioned in Claim 1.

3. Process according to Claim 1 and 2, characterised in that the coating compositions are applied to mineral substrates which possibly contain water.

4. Process according to Claim 1 to 3, characterised in that 0.1 to 5% by weight of a carboxylic acid anhydride, based on the sum of (i) and (ii) is incorporated into the coating compositions.

5. Process according to Claim 1 to 4, characterised in that auxiliaries and additives which are customary in coating technology are incorporated into the coating compositions.

mères à NCO à base de diisocyanates organiques à l'intérieur de l'intervalle de poids moléculaire de 168 à 300 et de polyalcoylène-éthers-polyols d'une fonctionnalité hydroxyle (moyenne) de 2 à 3, c) en des mélanges de a) et de b), les proportions

quantitatives des partenaires de réaction (i) et (ii) étant utilisées en des quantités correspondant à un rapport d'équivalence $NCO/NH_2$ de 0,5 : 1 à 1,5 : 1.

2. Procédé selon la revendication 1, caractérisé en ce qu'on utilise des agents de revêtement dont le composant de liant (ii) consiste exclusivement en les diamines a) citées à la revendication 1.

3. Procédé selon les revendications 1 et 2, caractérisé en ce qu'on applique les agents de revêtement sur des substrats minéraux qui contiennent éventuellement de l'eau.

4. Procédé selon les revendications 1 à 3, caractérisé en ce qu'on incorpore aux agents de revêtement, par rapport à la somme de (i) + (ii), 0,1 à 5% en poids d'un anhydride d'acide carboxylique.

5. Procédé selon les revendications 1 à 4, caractérisé en ce qu'on incorpore dans les agents de revêtement des auxiliaires et additifs en usage dans la technologie des revêtements.